(19) Europäisches Patentamt
European Patent Office
Office européen des brevets

(11) **EP 2 223 285 B1**

(12) **EUROPÄISCHE PATENTSCHRIFT**

(45) Veröffentlichungstag und Bekanntmachung des Hinweises auf die Patenterteilung:
**29.05.2013 Patentblatt 2013/22**

(21) Anmeldenummer: **09781630.0**

(22) Anmeldetag: **07.08.2009**

(51) Int Cl.:
***G06T 11/20*** *(2006.01)*

(86) Internationale Anmeldenummer:
**PCT/EP2009/060296**

(87) Internationale Veröffentlichungsnummer:
**WO 2010/015712 (11.02.2010 Gazette 2010/06)**

(54) **VERFAHREN UND VORRICHTUNG ZUR ERZEUGUNG VON BILDINFORMATIONEN**

METHOD AND DEVICE FOR PRODUCING IMAGE INFORMATION

PROCÉDÉ ET DISPOSITIF POUR GÉNÉRER DES INFORMATIONS D'IMAGE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **08.08.2008 DE 102008036950**
**12.09.2008 DE 102008044521**

(43) Veröffentlichungstag der Anmeldung:
**01.09.2010 Patentblatt 2010/35**

(73) Patentinhaber: **TOSHIBA Electronics Europe GmbH**
**40549 Düsseldorf (DE)**

(72) Erfinder:
• **KUMMERT, Anton**
**45549 Sprockhövel (DE)**
• **SCHAULAND, Sam**
**42657 Solingen (DE)**

• **HASELHOFF, Anselm**
**42285 Wuppertal (DE)**
• **VELTEN, Jörg**
**42369 Wuppertal (DE)**
• **KEREMIS, Georgios**
**50679 Köln (DE)**
• **KRIPS, Marco**
**42859 Remscheid (DE)**

(74) Vertreter: **Cohausz & Florack**
**Patent- und Rechtsanwälte**
**Partnerschaftsgesellschaft**
**Bleichstraße 14**
**40211 Düsseldorf (DE)**

(56) Entgegenhaltungen:
**EP-A- 1 906 359     US-A- 5 442 737**
**US-A- 5 533 181     US-A1- 2007 153 006**

EP 2 223 285 B1

**EP 2 223 285 B1**

## Beschreibung

Die Erfindung betrifft ein Verfahren zur Erzeugung von Bildinformationen eines Bildes einer Bildsequenz unter Verwendung der Bildinformationen eines ersten Bildes, bei welchem

- die Bildinformationen im ersten Bild eine Anfangsposition und die Bildinformationen im zu erzeugenden Bild eine Endposition aufweisen,

- ein erstes Bewegungsmaß für die Bewegung der Bildinformationen von der Anfangsposition zur Endposition ermittelt oder vorgegeben wird,

- Zwischenbilder für Zwischenpositionen der Bildinformationen berechnet werden,

- die Bildinformationen der Zwischenbilder mit Gewichtungsfaktoren multipliziert und mit den Bildinformationen des ersten Bildes zu Bildinformationen des zu erzeugenden Bildes überlagert werden und

- das so erzeugte Bild dargestellt oder weiterverarbeitet wird.

Darüber hinaus betrifft die Erfindung ein Computerprogrammprodukt und eine Vorrichtung zur Durchführung des erfindungsgemäßen Verfahrens sowie vorteilhafte Verwendungen.

Verfahren zur Erzeugung von Bildinformationen eines Bildes einer Bildsequenz werden in vielen Bereichen eingesetzt, wo beispielsweise auf Displays Bildinformationen dargestellt werden, die zuvor berechnet worden sind. Insbesondere bewegte Bildinformationen, welche sich innerhalb eines gewissen Zeitverlaufs von einer Anfangsposition in eine Endposition bewegen, können aber im Hinblick auf die Sichtbarkeit der Bildinformationen problematisch werden. So werden üblicherweise bei einem Display konstante Wiederholraten zur Erzeugung von bewegten Bildern verwendet. Bei der konventionellen Darstellung von bewegten Bildern kommt es bei schnellen Bewegungen zu stroboskopartigen Artefakten der Darstellung, bei welchen das menschliche Auge die bewegte Bildinformation an verschiedenen Orten gleichzeitig und ortsfest erkennt. Dies tritt beispielsweise bei der Darstellung von drehenden Zeigern in einem Display auf, aber auch bei der Darstellung anderer Bewegungen, insbesondere linearer Bewegungen. Tritt eine Bewegung von Bildinformationen in zwei aufeinanderfolgenden Bildern auf, kann ein erstes Bewegungsmaß für die Bewegung der Bildinformationen im Bild ermittelt werden. Das erste Bewegungsmaß im Sinne der vorliegenden Erfindung wird aus der Differenz der Anfangsposition und Endposition der Bildinformationen ermittelt oder aber fest vorgegeben. Das Bewegungsmaß entspricht der Bewegungsänderung der Bildinformationen zwischen zwei unterschiedlichen Bildern, welche zu unterschiedlichen Zeitpunkten dargestellt werden und stellt insofern eine Art Geschwindigkeit dar. Unter Bildinformationen werden im Bild dargestellte Informationen beispielsweise Gegenstände bzw. die zugehörigen Farbwerte und Position der entsprechenden Pixel des Bildes verstanden. Als Zwischenbilder werden solche Bilder bezeichnet, welche die Bewegung der Bildinformationen von der Anfangsposition in die Endposition in Zwischenpositionen unterteilen. Eine Berechnung und Überlagerung von Zwischenbildern, welche zuvor mit einem Gewichtungsfaktor multipliziert werden, wird beispielsweise beim "Motion Blurring" dazu verwendet, die grafische Darstellung auf einem Display für das menschliche Auge zu verbessern. In der US Patentschrift US2007/0153006 (Robins et. al.) wird ebenfalls die Überlagerung von Bildern einer Animation genutzt, hingegen jedoch lediglich ein statisches Bild zur Veranschaulichung einer Animation erzeugt. Bei dynamischen Bewegungen, also Bewegungen von Bildinformationen, bei welchen sich das Bewegungsmaß ständig ändert, gibt es aber weiterhin Probleme in der Darstellung. Werden zu viele Zwischenbilder erzeugt und mit dem ursprünglichen Bild überlagert, ergibt sich eine unscharfe Darstellung der Bildinformationen. Wird die Anzahl der Zwischenbilder, welche überlagert werden, zu gering eingestellt, entsteht bei schnellen Bewegungen der nicht gewollte Stroboskopeffekt. Eine klare Darstellung sowie eine sehr gute Sichtbarkeit und Ablesbarkeit von bewegten Bildinformationen wird beispielsweise bei Displays in Kraftfahrzeugen, in Flugzeugen erwartet, welche für das führen der Fahrzeuge notwendig sind. Deshalb wurde bisher häufig auf die elektronische Darstellung von Zeigerinstrumenten, wie sie beispielsweise in der US Patentschrift 5,442,737 (Smith) offenbart ist, in solchen Applikationen verzichtet, um keine Sicherheitsprobleme zu generieren.

Hiervon ausgehend liegt der vorliegenden Erfindung die Aufgabe zugrunde, ein Verfahren zur Erzeugung von Bildinformationen eines Bildes einer Bildsequenz zur Verfügung zu stellen, so dass auch bei unterschiedlich schnellen Bewegungen der Bildinformationen ein Stroboskopeffekt vermieden wird und dennoch eine klare Darstellung bei geringen Geschwindigkeiten der Bildinformationen ermöglicht wird. Darüber hinaus liegt der Erfindung die Aufgabe zugrunde, ein Computerprogrammprodukt sowie eine Vorrichtung zur Durchführung des erfindungsgemäßen Verfahrens vorzuschlagen und eine vorteilhafte Verwendung des erfindungsgemäßen Verfahrens aufzuzeigen.

Gemäß einer ersten Lehre der vorliegenden Erfindung wird die oben aufgezeigte Aufgabe dadurch gelöst, dass die Anzahl der Zwischenbilder abhängig vom Wert des ersten Bewegungsmaßes ermittelt wird und für jedes Zwischenbild

2

ein Gewichtungsfaktor berechnet wird.

Es hat sich gezeigt, dass die variable Wahl der Anzahl der Zwischenbilder abhängig von dem Wert des ersten Bewegungsmaßes, d.h. von der Bewegungsänderung zwischen zwei Bildern, es ermöglicht, beispielsweise bei langsamen Bewegungen weniger Zwischenbilder zu verwenden und bei schnellen Bewegungen eine höhere Anzahl an Zwischenbildern zu verwenden. Hieraus resultiert, dass bei geringen Geschwindigkeiten die dargestellte Bildinformation weiterhin scharf dargestellt ist und bei hohen Geschwindigkeiten der Stroboskopeffekt nicht auftritt.

Gemäß einer ersten Ausgestaltung des erfindungsgemäßen Verfahrens ist die Anzahl der Zwischenbilder proportional zum Wert des ersten Bewegungsmaßes, wobei die Anzahl der Zwischenbilder optional durch Division des ersten Bewegungsmaßes mit einem Auflösungswert ermittelt wird. Der Auflösungswert kann vorgegeben werden, um die Qualität der Darstellung einzustellen. Eine Verringerung des Auflösungswertes führt zu einer höheren Anzahl an Zwischenbildern und zu einer verbesserten Darstellung, jedoch auch zu einem erhöhten Rechenaufwand. Durch die Proportionalität der Anzahl der Zwischenbilder zum Wert des ersten Bewegungsmaßes kann auf einfache Weise sichergestellt werden, dass zur scharfen Darstellung langsam bewegter Bildinformationen eine geringe Anzahl an Zwischenbildern und bei schnell bewegten Bildinformationen eine hohe Anzahl an Zwischenbildern generiert wird. Bei drehenden Zeigern hat es sich beispielweise als vorteilhaft erwiesen, den als Winkel im Gradmaß vorgegebenen Auflösungsfaktor wie folgt zu begrenzen:

$$\gamma \leq \frac{180^{\circ}}{2\pi r_z},$$

wobei $r_z$ die radiale Länge des Zeigers ausgedrückt in der Zahl der Pixel entspricht.

Eine weitere Verbesserung der Darstellung von Bildinformationen wird gemäß einer vorteilhaften Ausführungsform dadurch erreicht, dass die Gewichtungsfaktoren einen von der Anzahl der Zwischenbilder $n_{max}$ abhängigen Wert aufweisen. Beispielsweise kann der Gewichtungsfaktor $h_n$ gemäß folgender Variante ermittelt werden:

$$h_n = \frac{1}{(n_{max} + 1)}, \text{ mit } n = 0, \dots, n_{max},$$

wobei für $n_{max}$ gilt:

$$n_{max} = \text{round}\left(\frac{\omega}{\gamma}\right)$$

wobei $\omega$ dem ersten Bewegungsmaß und $\gamma$ dem Auflösungswert entspricht.

Eine weitere verbesserte Ausführungsform des erfindungsgemäßen Verfahrens berechnet die Anzahl der Bilder $n_{max}$ sowie die Gewichtungsfaktoren $h_n$ auf einem anderen Wege. Gemäß dieser Ausführungsform gilt:

$$n_{max} = 2 \cdot \text{round}\left(\frac{\omega}{\gamma}\right),$$

wobei

$$h_n = \frac{1 - \cos\left(2\pi \, \frac{n+1}{2+n_{max}}\right)}{1 + n_{max} - \sum_{i=0}^{n_{max}} \cos\left(2\pi \, \frac{i+1}{2+n_{max}}\right)}, \text{ mit } n = 0,\ldots,\ n_{max}.$$

Insbesondere die letzte Ausführungsform benötigt zwar einen erhöhten Rechenaufwand, es kann mit ihr jedoch eine weitere Steigerung der Bildqualität bei drehenden Zeigern erreicht werden. Andere Berechnungsarten von $n_{max}$ und $h_n$ sind ebenso denkbar.

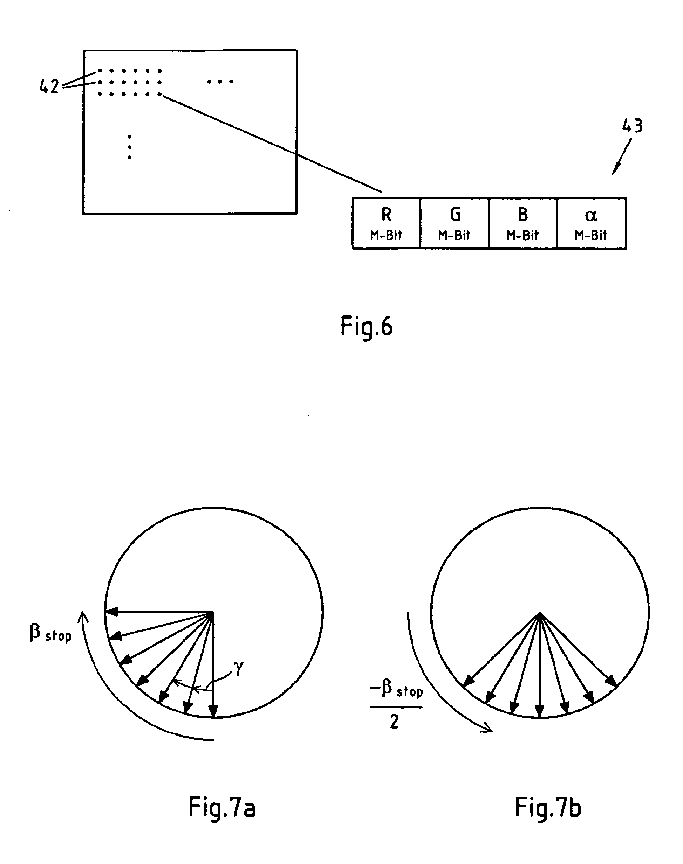

Werden Zwischenpositionen der Bildinformationen gemäß einer nächsten Ausgestaltung des erfindungsgemäßen Verfahrens zwischen Anfangs- und Endpositionen zur Berechnung der Zwischenbilder verwendet und die Bildinformationen des überlagerten Bildes um das halbe erste Bewegungsmaß entgegen der Bewegungsrichtung korrigiert, kann die Darstellung der bewegten Bildinformationen weiter verbessert werden. Insbesondere ordnen sich dann die Positionen der Bildinformationen der Zwischenbilder um die Positionen der Bildinformationen in dem zu erzeugenden Bild in symmetrischer Weise an, wie später in Fig. 7 gezeigt wird.

Es hat sich gezeigt, dass es vorteilhaft ist, gemäß einer weiteren Ausführungsform des erfindungsgemäßen Verfahrens, die Zwischenpositionen der Bildinformationen der Zwischenbilder durch Verschiebung der Bildinformationen des ersten Bildes um ganzzahlige Vielfache des Auflösungswertes berechnet werden. Hierdurch wird eine einfache Möglichkeit geschaffen, den Auflösungswert $\gamma$ zur Bestimmung der Positionen der Bildinformationen der Zwischenbilder zu verwenden und insofern die Genauigkeit der Darstellung des erzeugten, überlagerten Bildes einzustellen.

Eine weitere vorteilhafte Ausführungsform des erfindungsgemäßen Verfahrens ist dadurch gekennzeichnet, dass mindestens ein Ursprungsbild zur Berechnung der Zwischenbilder verwendet wird, ein zweites Bewegungsmaß zwischen der Anfangsposition der Bildinformationen im Ursprungsbild und der Endposition der Bildinformationen im zu erzeugenden Bild bestimmt oder übermittelt wird, die Bildinformationen der Zwischenbilder mit den Bildinformationen des Ursprungsbilds unter Verwendung von Gewichtungsfaktoren überlagert werden und die Bildinformationen des überlagerten Bildes um das zweite Bewegungsmaß zur Endposition der Bildinformationen verschoben werden. Hierdurch wird die Möglichkeit geschaffen, ein zweites Bewegungsmaß zu verwenden, mit welchem bereits bekannte Ursprungsbilder in die Endposition des zu erzeugenden Bildes verschoben werden können. Die Überlagerung der Zwischenbilder findet dabei durch die Überlagerung von verschobenen Ursprungsbildern statt. Beispielsweise kann hierdurch für jedes erste Bewegungsmaß eine Schablone bzw. ein Template durch Überlagerung der erzeugten Zwischenbildern des Ursprungsbildes zur Verfügung gestellt werden, welches um das zweite Bewegungsmaß lediglich verschoben werden muss, um das zu erzeugende Bild der Bildsequenz zu erhalten. Unter Verschieben kann beispielsweise eine translatorische Bewegung, beispielsweise eine lineare Bewegung als auch eine rotatorische, beispielsweise nicht lineare Bewegung verstanden werden. Diese Ausführungsform des erfindungsgemäßen Verfahrens eignet sich insbesondere dann, wenn die darzustellenden Bildinformationen auf Ursprungsbilder zurückführbar sind. Bei Verwendung einer Mehrzahl von Ursprungsbildern können durch die Auswahl der Ursprungsbilder beispielsweise abhängig von dem zweiten Bewegungsmaß zusätzliche Effekte bei der Erzeugung der Bildinformationen berücksichtigt werden. Beispielsweise sind hierdurch Schatteneffekte abhängig von dem zweiten Bewegungsmaß in der Bildsequenz darstellbar.

Eine Verbesserung der Darstellung des erzeugten Bildes der Bildsequenz kann gemäß einer weiteren Ausführungsform des erfindungsgemäßen Verfahrens dadurch erreicht werden, dass die Endpositionen der Bildinformationen in dem überlagerten Bild um das halbe erste Bewegungsmaß in negativer Bewegungsrichtung korrigiert werden. Ist das erste Bewegungsmaß eine Winkeldifferenz einer Drehung um eine Drehachse in einer vorgegebenen Zeiteinheit, erfolgt eine Drehung entgegen der Richtung des Bewegungsmaßes, so dass die stroboskopartefaktfreie Darstellung von beispielsweise drehenden Zeigern verbessert wird.

Wird mindestens ein Ursprungsbild verwendet, können drehende Zeiger dadurch verbessert dargestellt werden, dass das zweite Bewegungsmaß ein Winkel ist, beispielsweise der Winkel zwischen der Zeigerposition im Ursprungsbild und der Zeigerposition im zu erzeugenden Bild der Bildsequenz.

Um den Rechenaufwand zur Darstellung der Bildsequenz zu verringern, kann das erfindungsgemäße Verfahren dadurch verbessert werden, dass die Berechnung der Bildinformationen der Zwischenbilder für mindestens ein vordefiniertes, erstes Bewegungsmaß offline erfolgt und die durch Überlagerung der berechneten Bildinformationen der Zwischenbilder erzeugten Bildinformationen zu jedem ersten Bewegungsmaß als Schablonen in einem Speicher abgelegt werden. Beispielsweise können für Werte des Bewegungsmaßes von 0 bis $\omega_{max}$ Stützstellen $\omega_i$ ermittelt werden, für welchen eine Schablone bzw. ein Template erstellt wird. Die Abstände der einzelnen Bewegungsmaßstützstellen $\omega_i$ kann linear oder nicht linear, beispielsweise logarithmisch gewählt werden. Die Zeiteinheit für das Bewegungsmaß $\omega_i$ kann beispielsweise die der Bildframerate bei der Darstellung der Bilder aber auch eine Abtastrate, beispielsweise eines Sensors, sein. Im Offline-Modus werden die generierten Schablonen vorab gespeichert und können beispielsweise für jedes darzustellende Bewegungsmaß entsprechend dem zweiten Bewegungsmaß verschoben und dargestellt werden.

Vorzugsweise bestehen die Bildinformationen des ersten Bildes, der Zwischenbilder und der Ursprungsbilder zumindest aus Farbwerten und Transparenzwerten pro Pixel des Bildes. Beispielsweise können die Pixel in einem RGB$\alpha$-Format oder auch $\alpha$RGB-Format elektronisch gespeichert werden. Ein anderes Format stellt das CMY(K) dar. Über die Transparenzwerte, beispielsweise $\alpha$ oder K, können Überlagerungen der Bilder mit anderen Bildern, beispielsweise einem Hintergrundbild, welches nicht neu berechnet werden muss, auf einfache Weise erfolgen. Das zu erzeugende fertige Bild hat, wenn es dargestellt werden soll, lediglich RGB oder CMY Werte. Es gibt aber auch andere Möglichkeiten Bildinformationen von Bildern zu beschreiben und diese zu überlagern.

Gemäß einer zweiten Lehre der vorliegenden Erfindung wird die oben aufgezeigte Aufgabe durch ein Computerprogrammprodukt zur Durchführung des erfindungsgemäßen Verfahrens gelöst. Das Computerprogrammprodukt kann Prozessormittel veranlassen, das erfindungsgemäße Verfahren durchzuführen.

Das erfindungsgemäße Verfahren kann allerdings nicht nur Software basierend durch ein Computerprogramm realisiert werden, sondern auch gemäß einer dritten Lehre der vorliegenden Erfindung durch eine Vorrichtung zur Durchführung des erfindungsgemäßen Verfahrens mit Speichermitteln, Berechnungsmitteln sowie Eingabe- und Ausgabemitteln, wobei die Eingabemittel zumindest die Eingabe eines ersten Bewegungsmaßes von Bildinformationen eines ersten Bildes einer Bildsequenz, die Berechnungsmittel zumindest eine Überlagerung von berechneten Zwischenbildern und die Ausgabemittel zumindest die Darstellung des erzeugten Bildes ermöglichen. Entsprechende Vorrichtungen können einerseits das erfindungsgemäße Verfahren mittels eines Computerprogramms also per Software auf Standardkomponenten ausführen. Zur Kostenminimierung kann andererseits auch eine Vorrichtung vorgesehen sein, welche spezielle hardwareimplementierte Komponenten aufweist, die spezifisch Speichermittel, Berechnungsmittel, Eingabe- und Ausgabemittel zur Durchführung des erfindungsgemäßen Verfahrens zur Verfügung stellen.

Gemäß einer vierten Lehre der vorliegenden Erfindung wird die oben aufgezeigte Aufgabe durch die Verwendung des erfindungsgemäßen Verfahrens zur Darstellung von Bildinformationen eines Bildes einer Bildsequenz auf einem Display, insbesondere zur Darstellung von Drehungen von Zeigern verwendet. Durch die Verwendung des erfindungsgemäßen Verfahrens ist es möglich stroboskopartefaktfreie Bewegungen auf einem Display darzustellen und so eine sehr realistische Darstellung von Objekten bzw. Bildinformationen zu ermöglichen.

Aus diesem Grund ist es auch besonders vorteilhaft das erfindungsgemäße Verfahren zur Darstellung von Zeigerinstrumenten, insbesondere eines Kraftfahrzeugs, Flugzeugs, Hubschraubers zu verwenden. Die Verwendung des erfindungsgemäßen Verfahrens zur Darstellung entsprechender Zeigerinstrumente verringert einerseits den Rechenaufwand zu einer fotorealistischen Darstellung ohne stroboskopartige Artefakte entsprechender Zeigerinstrumente auf dem Display und kann darüber hinaus zu einer Verringerung der Kosten und zur Steigerung der Flexibilität der Darstellung entsprechender Zeigerinstrumente ermöglichen. Darüber hinaus sind weitere Verwendungen des erfindungsgemäßen Verfahrens denkbar, sofern die Darstellung von bewegten Objekten oder Bildern auf einem Display erfolgen muss.

Es gibt nun eine Vielzahl von Möglichkeiten, das erfindungsgemäße Verfahren, das erfindungsgemäße

Computerprogrammprodukt, die erfindungsgemäße Vorrichtung sowie die Verwendung des erfindungsgemäßen Verfahrens weiterzugestalten und auszubilden. Hierzu wird verwiesen einerseits auf die den Patentansprüchen 1 und 14 nachfolgenden Patentansprüche. Andererseits auf die Beschreibung eines Ausführungsbeispiels in Verbindung mit der Zeichnung. In der Zeichnung zeigt

Fig. 1    in einem Schaubild ein Ausführungsbeispiel einer erfindungsgemäßen Verwendung des erfindungsgemäßen Verfahrens zur Erzeugung von Bildinformationen eines Bildes einer Bildsequenz,

Fig. 2    in einem Schaubild die Erzeugung des ersten und des zweiten Bewegungsmaßes für das Ausführungsbeispiel aus Fig. 1,

Fig. 3    in einem Blockdiagramm ein Ausführungsbeispiel des erfindungsgemäßen Verfahrens verwendet für die Darstellung von drehenden Zeigern,

Fig. 4    ein zweites Ausführungsbeispiel des erfindungsgemäßen Verfahrens in einem Blockdiagramm,

Fig. 5    in einem Blockdiagramm ein weiteres Ausführungsbeispiel des erfindungsgemäßen Verfahrens, bei welchem die Zwischenbildberechnungen offline durchgeführt werden,

Fig. 6    ein Schaubild des Aufbaus von Bildinformationen vorliegend im RGB$\alpha$-Format und

Fig. 7    ein Schaubild der Erzeugung einer Schablone von Zwischenbildern mit einem Ursprungsbild.

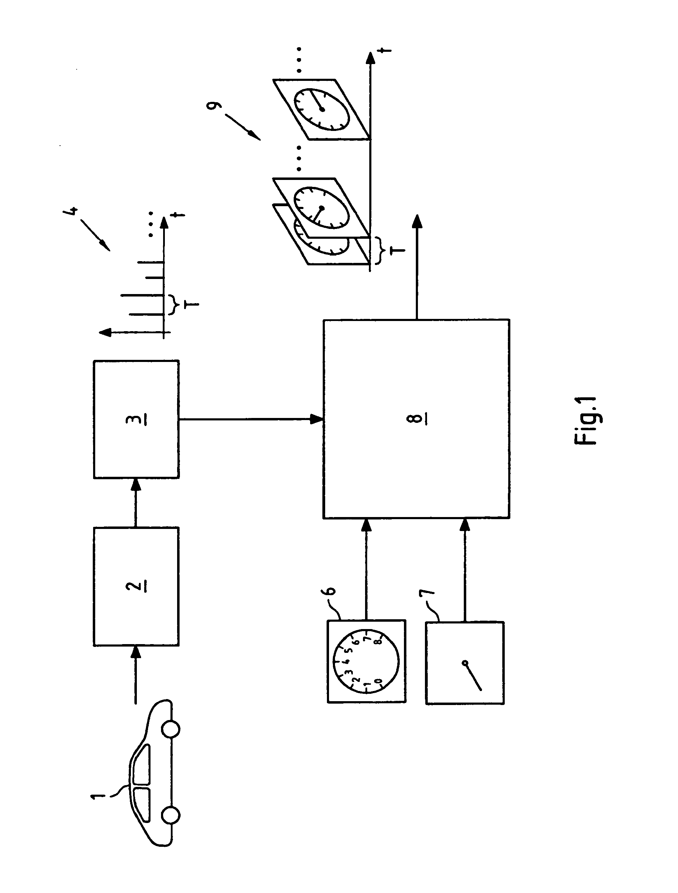

Fig. 1 zeigt in einem Schaubild ein Ausführungsbeispiel einer erfindungsgemäßen Verwendung des erfindungsgemäßen Verfahrens. Das erfindungsgemäße Verfahren wird in einem Kraftfahrzeug 1 zur Darstellung des Drehzahlmessers in einem Cockpit verwendet. Der Messwert des Sensors zur Bestimmung der Drehzahl des Motors wird über eine Abtastung 2 mit einer bestimmten Rate 1/T abgetastet. Die Drehzahlwerte werden einem Winkelwert, welcher die Stellung des Zeigers im Drehzahlmesser, welcher als Zeigerinstrument ausgebildet ist, zugeordnet bzw. in einen Winkelwert umgerechnet. Dies geschieht im Block 3. Das Schaubild 4 zeigt die Winkelwerte, welche in dem Block 3 bestimmt worden sind und sich über die Zeit t aufgrund von Änderungen der Drehzahl des Motors ändern.

Das dargestellte Ausführungsbeispiel des erfindungsgemäßen Verfahrens verwendet ein Hintergrundbild 6 des Drehzahlmessers sowie ein Ursprungsbild 7 des Zeigers des Drehzahlmessers, welche beispielsweise in einem RGBα-Format bereitgestellt werden. Das Ausführungsbeispiel des erfindungsgemäßen Verfahrens 8 erzeugt dann eine Bildsequenz 9, beispielsweise ebenfalls im RGB-Format.

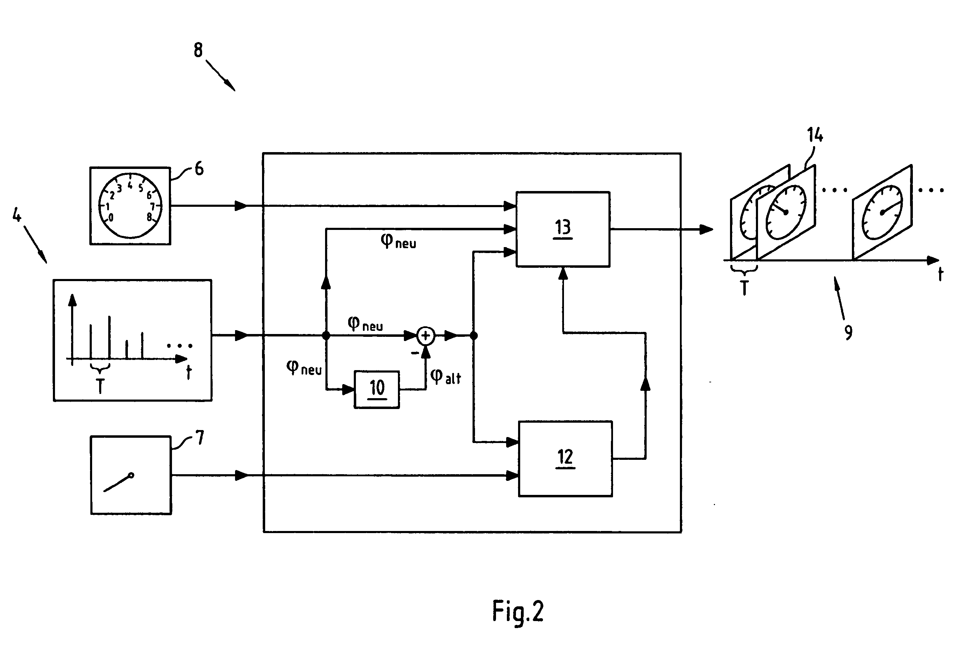

In Fig. 2 ist nun die Ermittlung des ersten und des zweiten Bewegungsmaßes gemäß dem Ausführungsbeispiel des erfindungsgemäßen Verfahrens zur Darstellung von Zeigern eines Drehzahlmessers dargestellt. Das erste Bewegungsmaß $\omega$ sowie das zweite Bewegungsmaß $\varphi_{neu}$ wird, wie bereits in Fig. 1 dargestellt, aus den Messwerten des Drehzahlmesssensors ermittelt. Zunächst werden die Messwerte des Drehzahlmesssensors in Winkelwerten $\varphi$ zur Darstellung des Zeigers umgerechnet. Der zuvor bestimmte Messwert $\varphi_{alt}$ wird in einem Zwischenspeicher 10 für jeweils eine Abtastperiode T gespeichert und nach Ermittlung eines neuen Winkelmesswertes für den Drehzahlmesser $\varphi_{neu}$ von diesem subtrahiert. Im Ergebnis erhält man das erste Bewegungsmaß $\omega$, welches sowohl ein positives als auch ein negatives Vorzeichen aufweisen kann. $\omega$ entspricht dann der Winkeländerung innerhalb einer Abtastperiode und insofern einer Winkelgeschwindigkeit. Das erste Bewegungsmaß $\omega$ wird dann an den Block 12 übergeben, welcher die Zwischenbildberechnungen und die Erzeugung der Schablonen übernimmt.

An Block 12 wird in dem vorliegenden Ausführungsbeispiel des erfindungsgemäßen Verfahrens zusätzlich ein Ursprungsbild 7, d.h. beispielsweise ein Bild eines Zeigers in einer vorbestimmten Position, beispielsweise der Nulldrehzahlposition, übergeben. Block 12 übergibt dann seinerseits an einen Block 13 die abhängig vom ersten Bewegungsmaß ermittelten Schablonen bzw. Templates des Zeigerbilds. In Block 13 wird unter Verwendung des Hintergrundbildes 6 des Drehzahlmessers, dem darzustellenden Winkel des Drehzahlmessers $\varphi_{neu}$ und das ermittelte erste Bewegungsmaß w ein Bild des Drehzahlmessers inklusive Zeiger 14 erzeugt, welches dann beispielsweise in einer Bildsequenz dargestellt werden kann.

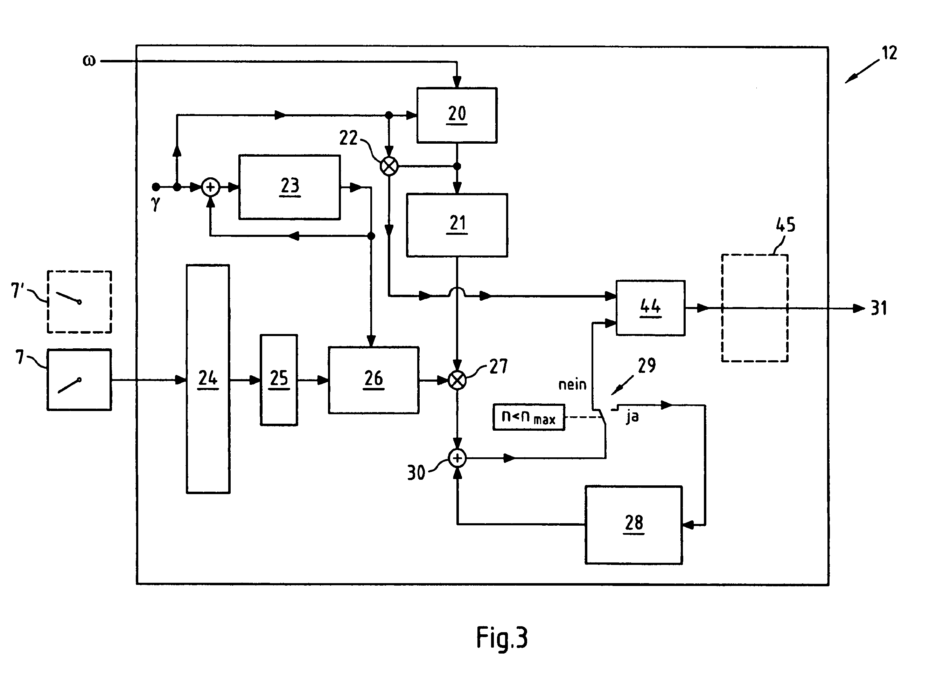

Fig. 3 zeigt nun den Aufbau des Blocks 12 im Falle der Verwendung des erfindungsgemäßen Verfahrens gemäß dem vorliegenden Ausführungsbeispiel zur Darstellung des Drehzahlmessers eines Kraftfahrzeuges. Zunächst wird Block 12 die ermittelte Differenz zwischen Winkelstellung alt $\varphi_{alt}$ und Winkelstellung neu $\varphi_{neu}$ des Drehzahlmessers als erstes Bewegungsmaß $\omega$ zyklisch mit einer Frequenz 1/T zugeführt. Die Zyklustaktzeit T entspricht dabei der Abtastrate bzw. Taktzeit des zur Verfügung stellen des Sensorwertes des Drehzahlmessersensors. Alle weiteren Schritte die jetzt beschrieben werden, erfolgen vorzugsweise innerhalb einer Taktrate bei online durchgeführter Berechnung der darzustellenden Bilder, d.h. innerhalb der Periode T.

Zunächst wird durch einen vorgegebenen Auflösungswert $\gamma$ im Block 20 die maximale Anzahl der Zwischenbilder $n_{max}$ berechnet. Die Berechungsart der maximalen Anzahl der Zwischenbilder $n_{max}$ kann abhängig von der Wahl des Gewichtungsfaktors sein. Im einfachsten Fall gilt für $n_{max}$:

$$n_{max} = \text{round}\left(\frac{\omega}{\gamma}\right).$$

Von Block 20 ausgehend, wird zunächst der maximale Drehwinkel $\beta_{stop}$ ermittelt, wobei im einfachsten Fall dann gilt:

$$\beta_{stop} = n_{max} \cdot \gamma.$$

Abhängig von $n_{max}$ werden dann in Block 21 die Gewichtungsfaktoren $h_n$, für n = 0,..., $n_{max}$ ermittelt. Auch hier stehen abhängig von der Berechnung von $n_{max}$ zwei verschiedene, bereits in der Beschreibung dargestellte Möglichkeiten zur Verfügung, die Gewichtungsfaktoren zu berechnen. In dem in Fig. 3 dargestellten Ausführungsbeispiel wird ein Ursprungsbild 7 zur Erzeugung des Bildes der Bildsequenz herangezogen. Im Block 24 wird zunächst das beispielsweise im RGBα-Format vorliegende Ursprungsbild 7 dadurch verändert, dass jeder RGB-Wert eines jeden Pixels des Ur-

sprungsbilds mit dem jeweiligen $\alpha$-Wert, also mit dem jeweiligen Transparenzwert, multipliziert und anschließend im Bildspeicher 25 abgelegt wird. Durch diese Maßnahme wird erreicht, dass auch leicht transparente Zeiger, deren Pixel $\alpha$-Werte von kleiner 1 haben, bearbeitet und im Hinblick auf Stroboskopartefakte optimiert dargestellt werden können. Dies gilt selbstverständlich nicht nur für die Darstellung von halb transparenten, beispielsweise gläsernen Zeigern, sondern für die Darstellung beliebiger Bewegungen von "halbtransparenten" oder teilweise transparenten Gegenständen. Gleichzeitig verringert sich der Rechenaufwand dadurch, dass das so erzeugte Bild an spezifischen Stellen, nämlich dort beispielsweise wo das Zeigerbild 7 vollständig transparent ist, Nullwerte als RGB-Werte enthält.

Zur Erzeugung der Zwischenbilder wird nun der in der Speicherzelle 23 vorliegende Winkelwert an den Block 26 übergeben, welcher dann das in Bildspeicher 25 gespeicherte Ursprungsbild um den übergebenen Winkelwert $\beta$ dreht. $\beta$ ist definiert als:

$$\beta = n \cdot \gamma \text{ mit } n = 0,\ldots, n_{max}.$$

Zu Beginn wird der Speicher 23 initialisiert und enthält insofern den Wert 0, so dass Block 26 das Ursprungsbild ausgibt, welches dann mit dem Gewichtungsfaktor $h_0$ in Position 27 multipliziert wird. Das so erhaltene Zwischenbild, für n = 0 entspricht dies dem Ursprungsbild multipliziert mit dem Gewichtungsfaktor $h_0$, wird einem Bildspeicher 28 zugeführt, solange $n < n_{max}$ ist. Die Abfrage, ob $n_{max}$ erreicht worden ist, erfolgt in Position 29. Nach der Erzeugung des ersten Zwischenbildes mit n = 0 wird an den Speicher 23 der Wert $\gamma$ übergeben, so dass für das zweite Zwischenbild gilt:

$$\beta = \gamma.$$

Das letzte Zwischenbild wird dann um den Winkel

$$\beta_{stop} = n_{max} \cdot \gamma$$

gedreht. Wie man hieraus erkennen kann, wird der maximale Drehwinkel der Zwischenbilderzeugung $\beta_{stop}$ in Schritte mit der Schrittweite $\gamma$ unterteilt und für jeden Schritt ein Zwischenbild erzeugt. Im nächsten Schritt wird beispielsweise nämlich dann im Block 26 die Drehung des Ursprungsbildes um den Winkel $\gamma$ und für das nächste Zwischenbild um den Winkel $2\gamma$ gedreht. Die so erzeugten Zwischenbilder werden in Punkt 27 mit den zugehörigen Gewichtungsfaktoren $h_n$ multipliziert und in Punkt 30 miteinander addiert und an den Bildspeicher 28 übergeben. Durch die Addition der mit den Gewichtungsfaktoren multiplizierten Zwischenbilder erfolgt eine Überlagerung von Zwischenbildern, wobei die Anzahl der Zwischenbilder von dem ersten Bewegungsmaß $\omega$ und dem Auflösungswert bzw. der Schrittweite $\gamma$ abhängt.

Bei einem großen Wert für $\omega$, d.h. bei großen Winkelgeschwindigkeiten, werden beispielsweise mehr Zwischenbilder erzeugt, dagegen bei geringen Winkelgeschwindigkeiten weniger Zwischenbilder. Hierdurch wird eine optimale Darstellung der Zeiger trotz unterschiedlicher Geschwindigkeiten in der Positionsänderung der Bildinformationen erreicht. Mit dem erfindungsgemäßen Verfahren gelingt damit auch die Darstellung von Drehzahlmessern bei beliebigen Drehgeschwindigkeiten ohne stroboskopartige Artefakte und Unschärfen bei sehr langsamen Bewegungen.

Ist nun das letzte Zwischenbild für $n_{max}$ erstellt und mit dem in Bildspeicher 28 bereits überlagerten Zwischenbildern überlagert worden, wird das erhaltene, überlagerte Bild der Zeigerposition, im Weiteren als Schablone oder Template bezeichnet, im Block 44 um den Winkel $-\beta_{stop}/2$ zurückgedreht, so dass die Zwischenbilder symmetrisch, beispielsweise um die Lage des Zeigers im Ursprungsbild 7 generiert worden sind. Das so erzeugte Template bzw. die so erzeugte Schablone im RGB$\alpha$-Format wird dann an den Block 13 übergeben. Für jedes erste Bewegungsmaß $\omega$ wird demnach eine Schablone erstellt.

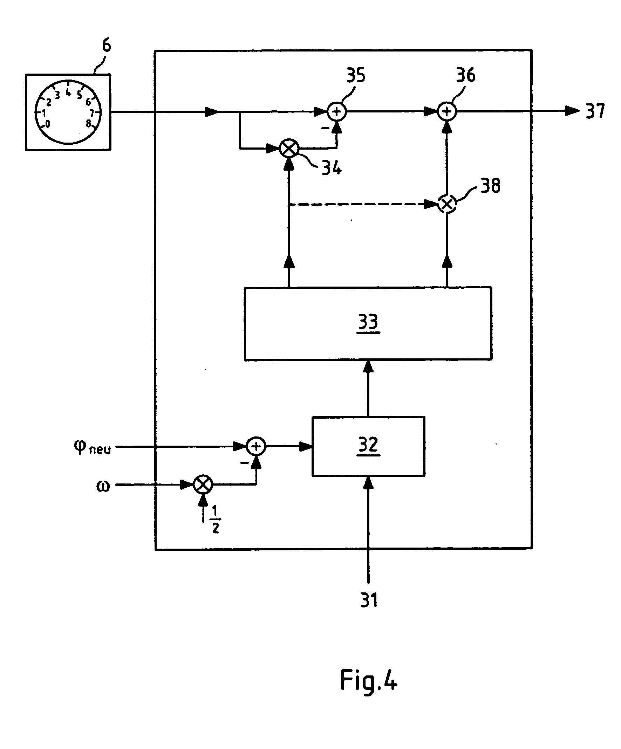

Optional können die RGB-Werte des erzeugten Templates vor Übergabe an den Block 13 mit dem zugehörigen $\alpha$-Wert dividiert werden. Dies erfolgt im optionalen Block 45. Hierdurch besteht die Möglichkeit, für die Überlagerung der Schablone mit dem Hintergrund beispielsweise eine konventionelle $\alpha$-Blending-Engine einzusetzen, die beispielsweise Hardware implementiert zur Verfügung steht. Der Einsatz einer $\alpha$-Blending-Engine erfordert dann bei der Erzeugung des Bildframes 37 in Fig. 4 die optionale Multiplikation 38 der RGB-Werte des Bildes mit der $\alpha$-Matrix des erzeugten

Bildes. Um die Anzahl der möglichen Schablonen zu begrenzen, können für die zu erwartenden Winkeländerungen innerhalb einer Taktrate Stützstellen $\omega_0$ bis $\omega_{max}$ ermittelt und Schablonen jeweils zu dem zugehörigen $\omega_i$ erzeugt werden. Wie bereits zuvor erläutert, können die Abstände der Stützstellen des ersten Bewegungsmaßes $\omega_i$ sowohl linear als auch beispielsweise logarithmisch sein.

In Fig. 3 ist darüber hinaus angedeutet, dass ein weiteres Ursprungsbild 7' zur Erstellung der überlagerten Zwischenbilder verwendet werden kann. Das Ursprungsbild 7' kann beispielsweise dann ausgewählt werden, sofern bei einer bestimmten Winkelstellung $\varphi_{neu}$ beispielsweise ein Schattenwurf berücksichtigt werden muss, welcher im Ursprungsbild 7 nicht enthalten ist. Die Verwendung von unterschiedlichen Ursprungsbildern ermöglicht also die Berücksichtigung von zusätzlichen grafischen Effekten.

Fig. 4 zeigt nun wie im Block 13 aus den von Block 12 übergebenen Schablonen bzw. Templates im RGB$\alpha$-Format das Bild des Drehzahlmessers mit einer die Drehzahl des Motors anzeigenden Zeigerposition erstellt wird. Zunächst wird die Schablone 31 zusammen mit dem Winkel $\tilde{\varphi}$ an den Block 32 übergeben. $\tilde{\varphi}$ wird vorzugsweise durch folgende Gleichung bestimmt:

$$\tilde{\varphi} = \varphi_{neu} - 1/2 \cdot \omega.$$

Im Block 32 wird nun die übergebene Schablone 31 um den Winkel $\tilde{\varphi}$ gedreht. Es hat sich gezeigt, dass eine Korrektur des Winkels $\tilde{\varphi}$ um das halbe Bewegungsmaß $\omega$ zu einer verbesserten Darstellung des Drehzahlmessers führt. Prinzipiell kann eine Drehung ohne Korrektur auch um den Winkel $\varphi_{neu}$ erfolgen. In Block 33 werden aus dem gedrehten Bild des Zeigers die $\alpha$-Werte eines jeden Pixels extrahiert und mit den RGB-Werten der Pixel des Hintergrundbildes 6 multipliziert 34, um anschließend von diesen wiederum subtrahiert zu werden 35. Anschließend wird das Ergebnis, welches im RGB-Format vorliegt, mit dem RGB-Anteil des gedrehten Bildes des Zeigers additiv verknüpft 36. Das im RGB-Format vorliegende Bildframe 37 wird dann beispielsweise zur Darstellung auf einem Display an Ausgabemittel weitergeleitet. Es ist aber ebenso denkbar, die darzustellenden Bilder im RGB$\alpha$-Format oder einem anderen Format an Ausgabemittel weiterzuleiten.

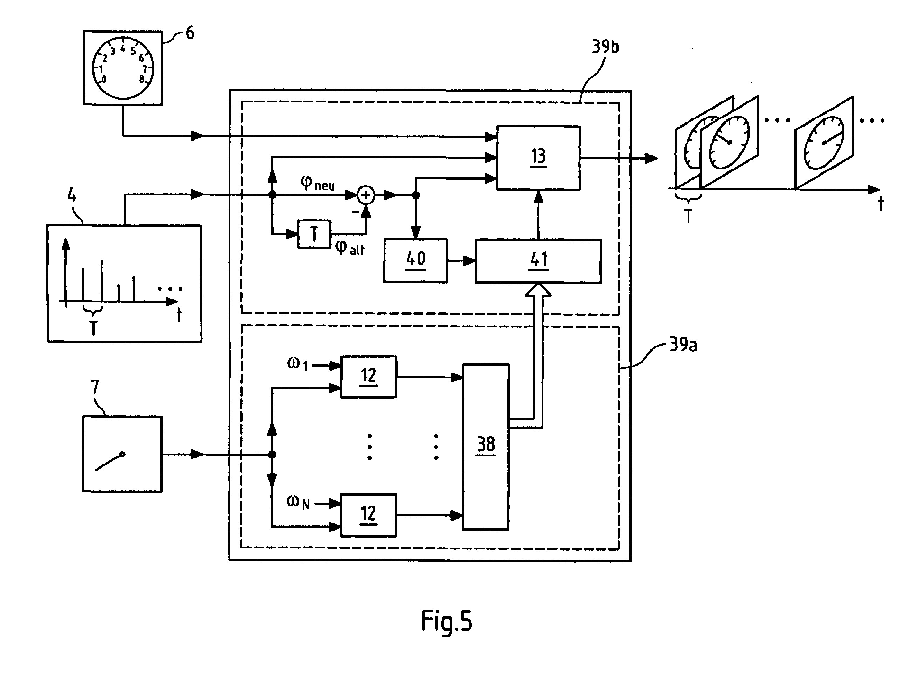

Fig. 5 zeigt ein weiteres Ausführungsbeispiel des erfindungsgemäßen Verfahrens, bei welchem die Schablonen zu den unterschiedlichen Bewegungsmaßen $\omega_0$ bis $\omega_{max}$ sequentiell oder parallel vorab, d.h. offline im Modul 39a ermittelt und in einem Speichermedium abgelegt werden. Hierzu zeigt Fig. 5 im Falle der parallelen Verarbeitung N Blöcke 12, welche offline, d.h. unabhängig von der aktuellen Zeigerposition, Schablonen für alle möglichen ersten Bewegungsmaße $\omega_i$ ermitteln. Diese werden im Speicher 38 gespeichert und an das Online-Modul 39b übergeben. Die Aufteilung in eine Offline-Berechnung der zu verwendenden Schablonen und in eine online durchzuführende Darstellung der Zeigerposition verringert den Berechnungsaufwand deutlich und damit auch die Kosten zur Bereitstellung von Vorrichtungen zur Durchführung des erfindungsgemäßen Verfahrens.

In dem Online-Modul 39 werden aus den übermittelten Winkelwerten des Drehzahlmessers 4 das erste und das zweite Bewegungsmaß $\varphi_{neu}$ und $\omega$ ermittelt. Anstelle der Berechnung der entsprechenden Schablone für das jeweilige $\omega$ wird nun lediglich die Speicheradresse in Block 40 berechnet, in welcher die jeweilige Schablone zum spezifischen $\omega$ im Speichermedium 41 abgelegt ist. Aus dem Speichermedium 41 wird dann die jeweilige Schablone beispielsweise im RGB$\alpha$-Format an den Block 13 übergeben und mit dem Hintergrundbild überlagert, so dass im Ergebnis eine Bildsequenz des Drehzahlmessers 14 erstellt wird.

Fig. 6 zeigt den Aufbau eines Bildes im RGB$\alpha$-Format sowie einen üblichen Aufbau eines einem Pixel zugeordneten Speicherbereichs. Typischerweise werden allen RGB$\alpha$-Werten gleich große Anzahlen von Bits zur Verfügung gestellt. Beispielsweise werden für die RGB$\alpha$-Werte jeweils 8 Bits zur Verfügung gestellt. Allerdings ist vorstellbar, dass eine andere Anzahl von Bits ebenfalls verwendet werden könnte. Je höher die Anzahl der verwendeten Bits desto größer ist der Rechenaufwand und desto realistischer ist die Darstellung der Farbwerte im Bild.

Schließlich zeigt Fig. 7 schematisch die Erzeugung von Zwischenbildern eines rotierenden Zeigers für eine Winkelgeschwindigkeit $\omega$ mit einem Wert für $n_{max}$ von 6. Fig. 7a) zeigt zunächst, dass die Zwischenbilder, jeder Zeiger steht für ein Zwischenbild, jeweils einen Winkelabstand von $\gamma$ aufweisen. Es werden so viele Zwischenbilder erzeugt, bis das Ursprungsbild mit dem senkrecht nach unten zeigenden Zeiger um den Winkel $\beta_{stop}$ gedreht und mit den anderen erzeugten Zwischenbildern überlagert wird. $\beta_{stop}$ entspricht $n_{max} \bullet \gamma$ mit $\gamma$ als Auflösungswert. Anschließend erfolgt die Rückdrehung des überlagerten Bildes um $-\beta_{stop}/2$, wie Fig. 7b) zeigt. Die Zwischenbilder im resultierenden Bild in Fig. 7b) liegen dann symmetrisch um das Ursprungsbild herum, so dass durch eine einfache Drehung der Schablone um $\varphi_{neu}$ bzw. um $\tilde{\varphi}$ die Schablone mit dem Hintergrundbild 6 überlagert und zur Darstellung des Drehzahlmessers in der gewünschten Winkelposition verwendet werden kann.

**Patentansprüche**

1. Verfahren zur Erzeugung von Bildinformationen eines Bildes einer Bildsequenz unter Verwendung der Bildinformationen eines ersten Bildes, bei welchem

- die Bildinformationen im ersten Bild eine Anfangsposition und die Bildinformationen im zu erzeugenden Bild eine Endposition aufweisen,
- ein erstes Bewegungsmaß für die Bewegung der Bildinformationen von der Anfangsposition zur Endposition ermittelt oder vorgegeben wird,
- Zwischenbilder für Zwischenpositionen der Bildinformationen berechnet werden,
- die Bildinformationen der Zwischenbilder mit Gewichtungsfaktoren multipliziert und mit den Bildinformationen des ersten Bildes zu Bildinformationen des zu erzeugenden Bildes überlagert werden und
- das so erzeugte Bild dargestellt oder weiterverarbeitet wird,
**dadurch gekennzeichnet, dass** die Anzahl der Zwischenbilder abhängig vom Wert des ersten Bewegungsmaßes ermittelt wird und für jedes Zwischenbild ein Gewichtungsfaktor berechnet wird.

2. Verfahren nach Anspruch 1,
**dadurch gekennzeichnet, dass** die Anzahl der Zwischenbilder proportional zum Wert des ersten Bewegungsmaßes ist, wobei die Anzahl der Zwischenbilder optional durch Division des ersten Bewegungsmaßes mit einem Auflösungswert ermittelt wird.

3. Verfahren nach Anspruch 1 oder 2,
**dadurch gekennzeichnet, dass** die Gewichtungsfaktoren einen von der Anzahl der Zwischenbilder abhängigen Wert aufweisen.

4. Verfahren nach einem der Ansprüche 1 bis 3,
**dadurch gekennzeichnet, dass** Zwischenpositionen der Bildinformationen zwischen Anfangs- und Endpositionen zur Berechnung der Zwischenbilder verwendet werden und die Bildinformationen des überlagerten Bildes um das halbe erste Bewegungsmaß entgegen der Bewegungsrichtung korrigiert wird.

5. Verfahren nach einem der Ansprüche 1 bis 4,
**dadurch gekennzeichnet, dass** die Zwischenpositionen der Bildinformationen der Zwischenbilder durch Verschiebung der Bildinformationen des ersten Bildes um ganzzahlige Vielfache des Auflösungswertes berechnet werden.

6. Verfahren nach einem der Ansprüche 1 bis 5,
**dadurch gekennzeichnet, dass** mindestens ein Ursprungsbild zur Berechnung der Zwischenbilder verwendet wird, ein zweites Bewegungsmaß zwischen der Anfangsposition der Bildinformationen im Ursprungsbild und der Endposition der Bildinformationen im zu erzeugenden Bild bestimmt oder übermittelt wird, die Bildinformationen der Zwischenbilder mit den Bildinformationen des Ursprungsbilds unter Verwendung von Gewichtungsfaktoren überlagert werden und die Bildinformationen des überlagerten Bildes um das zweite Bewegungsmaß zur Endposition der Bildinformationen verschoben werden.

7. Verfahren nach einem der Ansprüche 1 bis 6,
**dadurch gekennzeichnet, dass** die Endpositionen der Bildinformationen in dem überlagerten Bild um das halbe erste Bewegungsmaß in negativer Bewegungsrichtung korrigiert werden.

8. Verfahren nach einem der Ansprüche 1 bis 7,
**dadurch gekennzeichnet, dass** das erste Bewegungsmaß eine Winkeldifferenz einer Drehung um eine Drehachse in einer vorgegebenen Zeiteinheit ist.

9. Verfahren nach Anspruch 8,
**dadurch gekennzeichnet, dass** das zweite Bewegungsmaß ein Winkel ist.

10. Verfahren nach einem der Ansprüche 1 bis 9,
**dadurch gekennzeichnet, dass** die Berechnung der Bildinformationen der Zwischenbilder für mindestens ein vordefiniertes erstes Bewegungsmaß offline erfolgt und die durch Überlagerung der berechneten Bildinformationen der Zwischenbilder erzeugten Bildinformationen zu jedem ersten Bewegungsmaß in einem Speicher als Schablonen abgelegt werden.

**11.** Verfahren nach einem der Ansprüche 1 bis 10, **dadurch gekennzeichnet, dass** die Bildinformationen des ersten Bildes, der Zwischen-und Ursprungsbilder aus Farbwerten und Transparenzwerten pro Pixel des Bildes besteht.

**12.** Computerprogrammprodukt zur Durchführung eines Verfahrens gemäß Anspruch 1 bis 11.

**13.** Vorrichtung zur Durchführung eines Verfahrens nach einem der Ansprüche 1 bis 11 mit Speichermitteln, Berechnungsmitteln sowie Eingabe- und Ausgabemitteln, wobei die Eingabemittel zumindest die Eingabe eines ersten Bewegungsmaßes von Bildinformationen eines ersten Bildes einer Bildsequenz, die Berechnungsmittel eine Überlagerung von berechneten Zwischenbildern und die Ausgabemittel die Darstellung des erzeugten Bildes ermöglichen.

**14.** Verwendung eines Verfahrens nach einem der Ansprüche 1 bis 11 zur Darstellung von Bildinformationen eines Bildes einer Bildsequenz auf einem Display, insbesondere zur Darstellung von Drehungen von Zeigern.

**15.** Verwendung nach Anspruch 14, **dadurch gekennzeichnet, dass** die Zeigerinstrumente insbesondere eines Kraftfahrzeugs, Flugzeugs, Hubschraubers dargestellt werden.

**Claims**

**1.** A method for the generation of image information of an image of an image sequence using the image information of a first image, in which

- the image information in the first image comprises a start position and the image information in the image to be generated comprises an end position,
- a first movement measure is ascertained or specified for the movement of the image information from the start position to the end position,
- intermediate images are calculated for intermediate positions of the image information,
- the image information of the intermediate images is multiplied with weighting factors and is overlaid with the image information of the first image to obtain image information of the image to be generated, and
- the image generated in this way is displayed or further processed,
**characterised in that**
the number of intermediate images is ascertained depending upon the value of the first movement measure and a weighting factor is calculated for each intermediate image.

**2.** The method according to claim 1, **characterised in that** the number of intermediate images is proportional to the value of the first movement measure, wherein the number of intermediate images is optionally ascertained by dividing the first movement measure by a resolution value.

**3.** The method according to claim 1 or 2, **characterised in that** the weighting factors comprise a value depending upon the number of intermediate images.

**4.** The method according to one of claims 1 to 3, **characterised in that** intermediate positions of the image information between start and end positions are used for calculating the intermediate images, and **in that** the image information of the overlaid image is corrected by half the first movement measure contrary to the direction of movement.

**5.** The method according to one of claims 1 to 4, **characterised in that** the intermediate positions of the image information of the intermediate images are calculated by moving the image information of the first image by integer multiples of the resolution value.

**6.** The method according to one of claims 1 to 5, **characterised in that** at least one original image is used for calculating the intermediate images, a second movement measure between the start position of the image information in the original image and the end position of the image information in the image to be generated is determined or transferred, the image information of the intermediate images is overlaid with the image information of the original image using weighting factors, and the image information of the overlaid image is moved by the second movement measure to the end position of the image information.

7.  The method according to one of claims 1 to 6, **characterised in that**
    the end positions of the image information in the overlaid image are corrected by half the first movement measure in a negative direction of movement.

8.  The method according to one of claims 1 to 7, **characterised in that**
    the first movement measure is an angle difference of a rotation about a rotary axis in a specified unit of time.

9.  The method according to claim 8,
    **characterised in that**
    the second movement measure is an angle.

10. The method according to one of claims 1 to 9, **characterised in that**
    calculation of the image information of the intermediate images is effected offline for at least one predefined first movement measure and the image information generated by overlaying the calculated image information of the intermediate images for each first movement measure is filed as templates in a data store.

11. The method according to one of claims 1 to 10, **characterised in that**
    the image information of the first image, the intermediate images and the original image consists of colour values and transparency values for each pixel of the image.

12. A computer program product for carrying out a method according to claim 1 to 11.

13. A device for carrying out a method according to one of claims 1 to 11 with storage means, calculating means as well as input and output means, wherein the input means permit at least the input of a first movement measure of image information of a first image of an image sequence, the calculating means permit an overlay of the calculated intermediate images and the output means permit the display of the generated image.

14. Use of a method according to one of claims 1 to 11 for displaying image information of an image of an image sequence on a display, in particular for displaying rotations of pointers.

15. The use according to claim 14,
    **characterised in that**
    the pointer instruments in particular of a motor vehicle, an aircraft, a helicopter are displayed.


**Revendications**

1.  Procédé pour générer des informations d'image d'une image faisant partie d'une séquence d'images en utilisant les informations d'image d'une première image, dans lequel

    - les informations d'image dans la première image présentent une position de début et les informations d'image dans l'image à générer une position de fin,
    - un premier coefficient de déplacement pour le déplacement des informations d'image de la position de début vers la position de fin étant déterminé ou prescrit,
    - des images intermédiaires pour des positions intermédiaires des informations d'image étant calculées,
    - les informations d'image des images intermédiaires étant multipliées par des facteurs de pondération et étant superposées aux informations d'image de la première image pour donner des informations d'image de l'image à générer et
    - l'image ainsi générée étant représentée ou traitée,
    **caractérisé en ce que**
    le nombre d'images intermédiaire est déterminé en fonction de la valeur du premier coefficient de déplacement et **en ce que** un facteur de pondération pour chaque image intermédiaire est calculé.

2.  Procédé selon la revendication 1,

**caractérisé en ce que**
le nombre d'images intermédiaires est proportionnel à la valeur du premier coefficient de déplacement, le nombre d'images intermédiaires étant déterminé de manière optionnelle en divisant le premier coefficient de déplacement par une valeur de résolution.

3. Procédé selon la revendication 1 ou 2, **caractérisé en ce que**
les facteurs de pondération présentent une valeur dépendant du nombre d'images intermédiaires.

4. Procédé selon l'une des revendications 1 à 3, **caractérisé en ce que**
l'on utilise des positions intermédiaires des informations d'image entre des positions de début et de fin pour le calcul des images intermédiaires et **en ce que** l'on corrige les informations d'image de l'image de superposition de l'ordre de la moitié du premier coefficient de déplacement dans le sens contraire de la direction de déplacement.

5. Procédé selon l'une des revendications 1 à 4, **caractérisé en ce que**
les positions intermédiaires des informations d'image des images intermédiaires sont calculées en décalant les informations d'image de la première image de l'ordre de multiples entiers de la valeur de résolution.

6. Procédé selon l'une des revendications 1 à 5, **caractérisé en ce que**
l'on utilise au moins une image d'origine pour le calcul des images intermédiaires, un deuxième coefficient de déplacement entre la position de début des informations d'image dans l'image d'origine et la position de fin des informations d'image dans l'image à générer étant déterminé ou transmis, les informations d'image des images intermédiaires étant superposées aux informations d'image de l'image d'origine en utilisant des facteurs de pondération et les informations d'image de l'image de superposition étant décalées de l'ordre du deuxième coefficient de déplacement jusqu'à la position de fin des informations d'image.

7. Procédé selon l'une des revendications 1 à 6, **caractérisé en ce que**
les positions de fin des informations d'image dans l'image de superposition sont corrigées de l'ordre de la moitié du premier coefficient de déplacement en direction de déplacement négative.

8. Procédé selon l'une des revendications 1 à 7, **caractérisé en ce que**
le premier coefficient de déplacement est une différence d'angle d'une rotation autour d'un axe de rotation en une unité de temps prescrite.

9. Procédé selon la revendication 8,
**caractérisé en ce que**
le deuxième coefficient de déplacement est un angle.

10. Procédé selon l'une des revendications 1 à 9, **caractérisé en ce que**
le calcul des informations d'image des images intermédiaires s'effectue de manière offline pour au moins un premier coefficient de déplacement prédéfini et **en ce que** les informations d'image générées par superposition des informations d'image calculées des images intermédiaires sont déposées pour chaque premier coefficient de déplacement en tant que gabarits dans une mémoire.

11. Procédé selon l'une des revendications 1 à 10, **caractérisé en ce que**
les informations d'image de la première image, des images intermédiaires et d'origine se composent de valeurs de couleur et de valeurs de transparence par pixel de l'image.

12. Produit de programme informatique pour la mise en oeuvre d'un procédé selon les revendications 1 à 11.

13. Dispositif pour la mise en oeuvre d'un procédé selon l'une des revendications 1 à 11 avec des moyens de stockage, des moyens de calcul ainsi que des moyens d'entrée et de sortie, les moyens d'entrée permettant au moins l'entrée d'un premier coefficient de déplacement d'informations d'image d'une première image d'une séquence d'images, les moyens de calcul permettant une superposition d'images intermédiaires calculées et les moyens de sortie la représentation de l'image générée.

14. Utilisation d'un procédé selon l'une des revendications 1 à 11 pour la représentation d'informations d'image d'une image d'une séquence d'images sur un afficheur, en particulier pour la représentation de rotations d'aiguilles.

**15.** Utilisation selon la revendication 14, **caractérisée en ce que**
les instruments à aiguille en particulier d'un véhicule automobile, d'un avion, d'un hélicoptère sont représentés.

Fig.1

EP 2 223 285 B1

Fig.2

EP 2 223 285 B1

Fig.3

Fig.4

Fig.5

EP 2 223 285 B1

18

Fig.6

Fig.7a

Fig.7b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070153006 A, Robins
- US 5442737 A, Smith